# EUROPEAN PATENT SPECIFICATION

(11) **EP 2 089 847 B1**
(45) Date of publication and mention of the grant of the patent: **20.08.2014**
(21) Application number: 06805179.6
(22) Date of filing: 08.11.2006
(51) Int. Cl.: G06T 1/20, G06T 1/60, H04N 1/393, G06T 3/40

(54) **GRAPHICS PROCESSOR PIPELINED REDUCTION OPERATIONS**
PIPELINE-REDUKTIONSOPERATIONEN FÜR GRAPHISCHE PROZESSOREN
OPÉRATIONS DE RÉDUCTION EN PIPELINE PAR PROCESSEUR GRAPHIQUE

(43) Date of publication of application: 19.08.2009
(73) Proprietor: Intel Corporation, Santa Clara, CA 95052 (US)
(72) Inventor: LI, Wenlong, Beijing 10000 (CN); LI, Eric, Beijing 100000 (CN)
(74) Representative: Beresford, Keith Denis Lewis
(86) International application number: PCT/CN2006/002982
(87) International publication number: WO 2008/055381

(56) References cited:
- EP-A2- 0 747 860
- EP-A2- 0 810 553
- JP-A- 2006 165 825
- US-A1- 2005 162 671
- US-A1- 2006 059 494
- WILLIAMS L: "Pyramidal parametrics", COMPUTER GRAPHICS, ACM, US, vol. 17, no. 3, 25 July 1983 (1983-07-25), pages 1-11, XP002086498,

## Description

### BACKGROUND

A graphics processing unit (GPU) is a dedicated graphics rendering device that may be used with, for example, personal computers, workstations, or game consoles. GPUs are very efficient at manipulating and displaying computer graphics, GPUs contain multiple processing units that that concurrently perform independent operations (e.g., color space conversion at pixel level). Their highly parallel structure may make them more effective than a typical central processing unit (CPU) for a range of complex algorithms. A GPU may implement a number of graphics primitive operations in a way that makes running them much faster than drawing directly to the screen with the host CPU.

General purpose programming on a GPU is becoming an effective and popular way to accelerate computations, and serves as an important computational unit in conjunction with a CPU. In practice, a large number of existing general purpose processing kernels (e.g., texture processing, matrix and vector computation) may be optimized for running on a GPU. However, the GPU has some hardware constraints and structural limitations. For example, the GPU has no global variable concept and can't use several global variables to save temporal data on the fly. Accordingly, the GPU may not efficiently handle some commonly used reduction operations (e.g., average and sum computations over a bunch of data elements).

It is known to make use of textured images at different spatial resolution. European Patent Application EP 0810553 A2, for example, describes a texture mapping apparatus having a graphics-system texture memory that contains a plurality of texture maps, each of which represents a common texture image at a different respective spatial resolution. A given map's data that represents one region in a texture space is contained in a memory block that also holds other map's data for the same region, while a separate block contains that map's data representing a different region. This organisation reduces the occurrence of memory-page changes during the computation of a display-pixel value.

There is a need to provide high-speed reduction processing for performing graphics processing functions.

The present invention provides: a method to enable reduction operations to be performed on multiple image frames concurrently in a graphics processor unit; program code or code segments stored in a processor readable medium or transmitted by a computer data signal embodied in a carrier wave, or a signal modulated by a carrier, comprising executable code to perform such a method, a graphics processing unit to enable reduction operations to be performed on multiple images concurrently; a graphics processing unit comprising logic to perform such a method, and a system including a graphics processing unit, programmed to enable reduction operations to be performed on multiple images concurrently, each as set forth in the independent claims appended hereto.

### BRIEF DESCRIPTION OF THE DRAWINGS

The features and advantages of the various embodiments will become apparent from the following detailed description in which:
FIG. 1 illustrates an example video mining application, according to one embodiment;
FIG. 2A illustrates a flow diagram for an example filter loop method for reduction operations, according to one embodiment;
FIG. 2B illustrates an example application of the filter loop method, according to one embodiment;
FIG. 3A illustrates a flow diagram for an example pipleline texture method for reduction operations, according to one embodiment; and
FIG. 3B illustrates an example application of the pipeline texture loop method, according to one embodiment.

### DETAILED DESCRIPTION

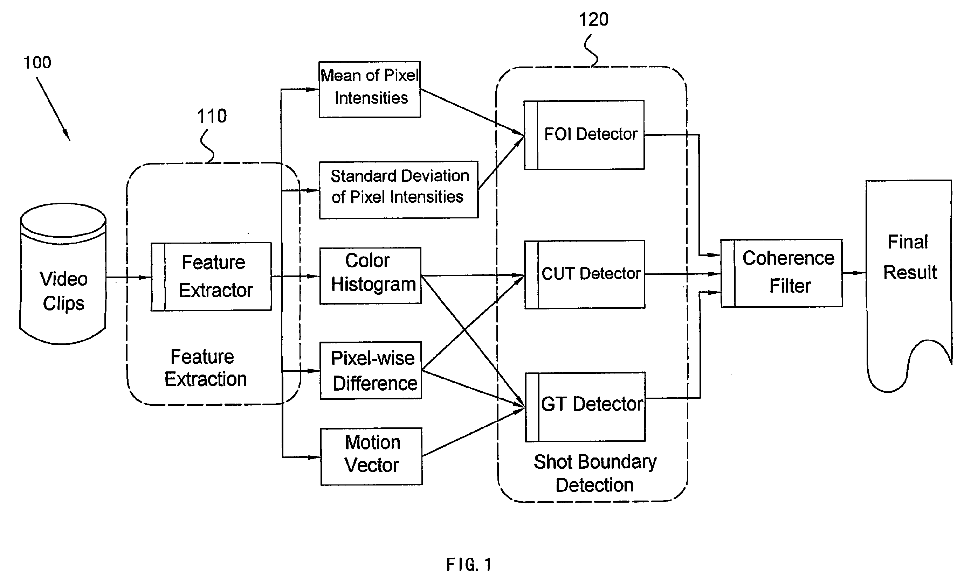

FIG. 1 illustrates an example video mining application 100. The video mining application 100 includes feature extraction 110 and shot boundary detection 120. The feature extraction 110 includes several reduction operations. The reduction operations may include, at least some subset of (1) determining average gray value of all pixels within a frame; (2) extracting black and white values of pixels within a specified region; (3) computing a RGB histogram for each color channel of a frame; and (4) computing average gray difference value for two consecutive frames.

Feature extraction may be performed on by downscaling a frame (e.g., 720x576 pixels) into smaller blocks in a hierarchical fashion and extracting the features for the blocks. The frame is eventually reduced to 1 pixel and the pixel is an average value for the frame.

A blocked method entails downsizing the frame in large blocks using large filters. For example, a 720x576 pixel frame may be downsized to a 20x18 pixel image using a 36x32 filter shader and then the 20x18 pixel image may be downscaled into a single pixel using a 20x18 filter shader. This method requires only a few steps (e.g., two downsizing events) but the steps may require significant memory access time. Utilizing such a method on a GPU that has a plurality of independent processing units (pipelines), may result in one pipeline hogging access to memory resulting in other pipelines stalling.

A filter loop method entails utilizing one filter shader several times to continually downsize the frame a certain amount and then once the image has been reduced to a certain size utilizing a second filter shader to reduce to 1 pixel. This method uses multiple pixel buffers for each frame to hold the various downsized versions. For example, a 2x2 filter may be used to ¼ the image 5 times thus reducing the image to 22x18 pixels. The 22x18 pixel image may then be downsized to 1 pixel using a 22x18 filter shader. This example may require 5 pixel buffers to store the various downsized images (each ¼ sized image).

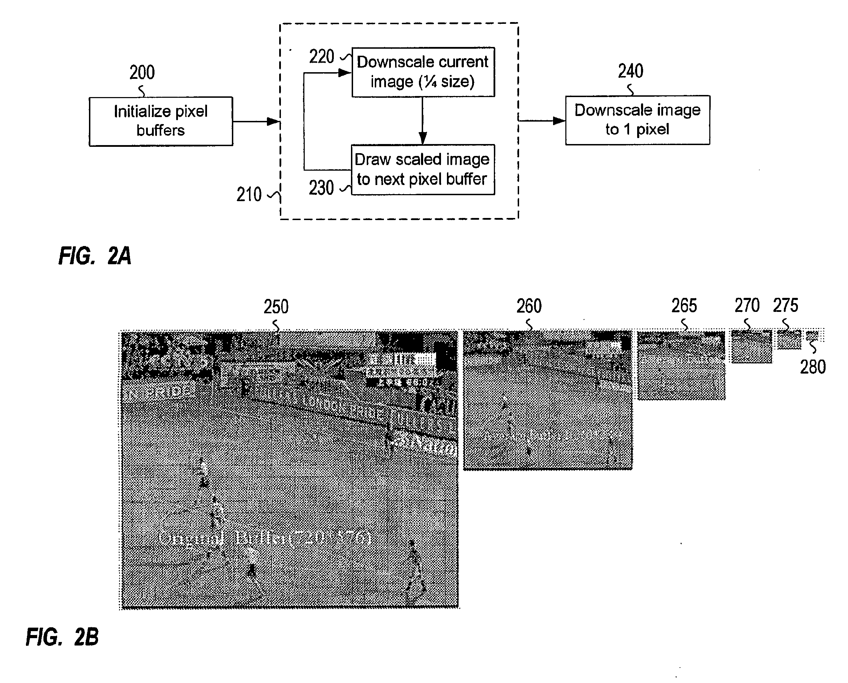

FIG. 2A illustrates a flow diagram for an example filter loop method for reduction operations. The pixel buffers (e.g., 5) are initiated (200). The frame is provided to a down sizing loop (210). The loop 210 downscales current image to ¼ size by utilizing a 2x2 filter (220). The scaled image is drawn to the next pixel buffer (230). The loop 210 ends when the current image is 22x18 pixels (e.g., after five ¼ down sizings). The 22x18 pixel image is then reduced to 1 pixel using a 22x18 filter shader (240). The result for the one pixel is the expected average value for the frame.

The filter loop method requires six downsizing operations for each frame and requires five additional pixel buffers to capture the downsized images. The critical path in the filter loop method is the downsizing utilizing the 22x18 filter shader.

FIG. 2B illustrates an example application of the filter loop method (e.g., 210). The frame is stored in a buffer 250 when it is received. The frame is downsized by ¼ and then stored in a next buffer 260. The downsized images are then downsized and stored in successive buffers 265-280. The imaged stored in buffer 280 is the 22x18 pixel image that is downsized to 1 pixel with a 22x18 filter shader.

A pipeline texture approach overlaps down scaling operations for various frames to increase parallelism. Multiple filtering steps are merged into a single filtering step so that multiple (e.g., 8) continuous frames with different size will be down scaled together. Initially a texture buffer that is larger (e.g., 2 times) than a fame is initialized. The texture buffer may include two sides, one side for storing a new frame and a second side for storing downscaled frames. A frame is read into the texture buffer. The texture buffer is then downsized and the downsized image is shifted. This process continues so that filtering operations are downscaling multiple frames at once. Once the operation is in steady state (the texture buffer is full) performing a single down scale is enough to obtain the final result.

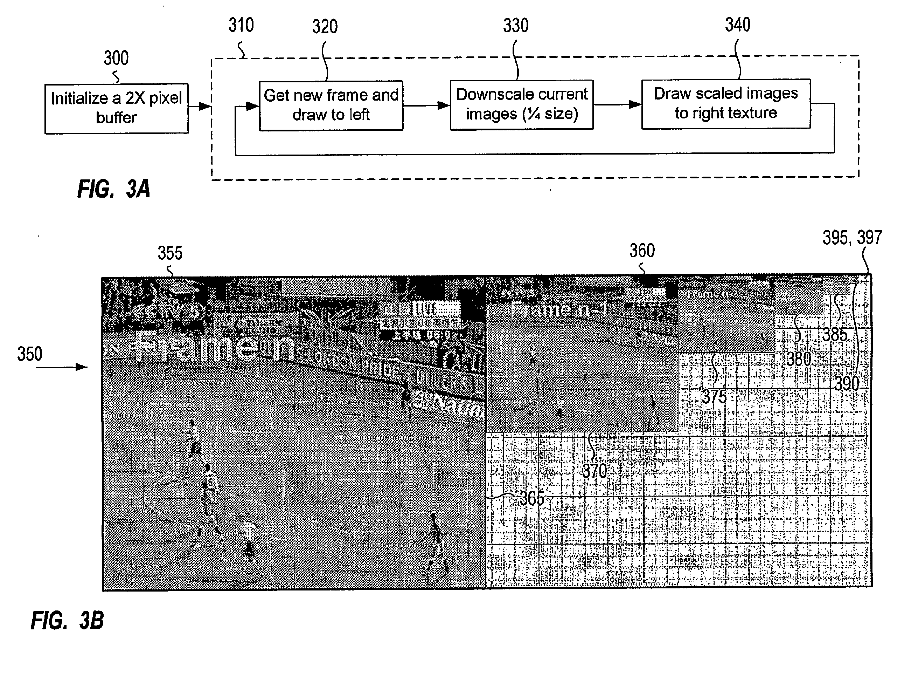

FIG. 3A illustrates a flow diagram for an example pipleline texture method for reduction operations. A 2X pixel buffer is initialized (300). A pipeline filter operation (310) is then initiated. The pipeline filter operation 310 includes reading a new frame and drawing it to the left side of the texture (320). The images in the texture are then downscaled by ¼ using a 2x2 filter (330) and all of the downscaled images are drawn to right side of the texture (340). In effect each image in the texture is downsized and then shifted to the right. The original frame (e.g., 720x576 pixels) is downsized by ¼ (e.g., 360x288 pixels) and drawn to the first location on the right side of the texture buffer. Images on the right side of the texture are downsized and then redrawn to the next location on the right side.

The process of downsizing is continually repeated. Each downsized operation downsizes a new frame and the downsized images in the right side of the texture buffer together. It takes seven ¼ downsizing operations to reduce a frame to a single pixel. The right side of the texture buffer can hold seven downscaled images. When full, the texture buffer holds a total of eight frames in varying downscaled versions and downscales each of these images together. The value after the 7^{th} downsizing operation is one pixel and represents the expected average value for the frame.

FIG. 3B illustrates an example application of the pipeline texture loop method (e.g., 310). A texture buffer 350 is twice the size as a frame (e.g., 1440x576 pixels) and includes a left side 355 and a right side 360. The left side 355 stores a new frame (frame N) 365. The right side 360 stores seven downscaled versions of previous frames. The previous frame (frame N-1) 370 is ¼ size and is stored in the first slot on the right side 360. Frame N-2 375 through frame N-7 397 are stored in successive slots on the right side and each is ¼ the size of the previous slot. It should be noted that frames N-6 and N-7 are of such a small size that they not clearly visable and are therefore labeled together for ease).

When a downsize operation is performed it reduces 7 images (various stages of seven different frames) together and redraws the images on the right side and then draw a new frame on the left side. Accordingly, when the pipeline texture method is in steady state each reduction operation will produce a result for one frame.

Utilizing the pipeline texture method on a GPU enables processing multiple computations for multiple frames at the same time. Such processing could not be performed on a CPU without sophisticated programming and SIMD optimization

The texture buffer embodiments described above discussed the buffer being twice as long as a frame in length (e.g., 720x576 to 1440x576) but is not limited thereto. Rather the buffer could be extended by height (e.g., 720x1152) without departing from the scope. Moreover, the embodiments showed a new frame being drawn to the left and downsized frames being drawn to the right but is not limited thereto. Rather, the new frame could be drawn to the right with downsized frames drawn to the left, the new frame could be drawn to the top and downsized frames drawn below, or new frames could be drawn to the bottom and downsized frames drawn above without departing from the scope. It is simply the fact that one downsizing operation is being performed on everything in the buffer and then the downsized images are redrawn to next location in buffer.

Although the disclosure has been illustrated by reference to specific embodiments, it will be apparent that the disclosure is not limited thereto as various changes and modifications may be made thereto without departing from the scope. Reference to "one embodiment" or "an embodiment" means that a particular feature, structure or characteristic described therein is included in at least one embodiment. Thus, the appearances of the phrase "in one embodiment" or "in an embodiment" appearing in various places throughout the specification are not necessarily all referring to the same embodiment.

An embodiment may be implemented by hardware, software, firmware, microcode, or any combination thereof. When implemented in software, firmware, or microcode, the elements of an embodiment are the program code or code segments to perform the necessary tasks. The code may be the actual code that carries out the operations, or code that emulates or simulates the operations. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or deceiving information, data, arguments, parameters, or memory contents. Information, arguments, parameters, data, etc. may be passed, forwarded, or transmitted via any suitable means including memory sharing, message passing, token passing, network transmission, etc. The program or code segments may be stored in a processor readable medium or transmitted by a computer data signal embodied in a carrier wave, or a signal modulated by a carrier, over a transmission medium. The "processor readable or accessible medium" or "machine readable or accessible medium" may include any medium that can store, transmit, or transfer information. Examples of the processor/machine readable/accessible medium include an electronic circuit, a semiconductor memory device, a read only memory (ROM), a flash memory, an erasable ROM (EROM), a floppy diskette, a compact disk (CD-ROM), an optical disk, a hard disk, a fiber optic medium, a radio frequency (RF) link, etc. The computer data signal may include any signal that can propagate over a transmission medium such as electronic network channels, optical fibers, air, electromagnetic, RF links, etc. The code segments may be downloaded via computer networks such as the Internet, Intranet, etc. The machine accessible medium may be embodied in an article of manufacture. The machine accessible medium may include data that, when accessed by a machine, cause the machine to perform the operations described in the following. The term "data" here refers to any type of information that is encoded for machine-readable purposes. Therefore, it may include program, code, data, file, etc.

All or part of an embodiment may be implemented by software. The software may have several modules coupled to one another. A software module is coupled to another module to receive variables, parameters, arguments, pointers, etc. and/or to generate or pass results, updated variables, pointers, etc. A software module may also be a software driver or interface to interact with the operating system running on the platform. A software module may also be a hardware driver to configure, set up, initialize, send and receive data to and from a hardware device.

An embodiment may be described as a process which is usually depicted as a flowchart, a flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed. A process may correspond to a method, a function, a procedure, a subroutine, a subprogram, etc. When a process corresponds to a function, its termination corresponds to a return of the function to the calling function or the main function.

## Claims

1. A method to enable reduction operations to be performed on multiple image frames concurrently in a graphics processing unit 'CPU, the method comprising
initializing (300) a texture buffer (350) that is twice the size of the image frames (365) to be processed and includes a first side (355) and a second side (360), wherein the first side (355) includes a first buffer slot to store an entire frame (365) and the second side (360) includes a plurality of buffer slots to store downscaled versions (370, 375, 380, 385, 390, 395, 397) of the entire frame (365), wherein the plurality of buffer slots are successively smaller;
drawing (320) a first entire frame (365) to the first buffer slot;
downscaling (330) the first entire frame (365) from the first buffer slot and copying (340) the downscaled version (370) of the first entire frame (365) to a second buffer slot of the plurality of buffer slots;
drawing (320) a next entire frame (365) to the first buffer slot (355);
downscaling (330) the contents (365, 370, 375, 380, 385, 390, 395) of each of the buffer slots of the texture buffer (350) and copying (340) the downscaled contents (370, 375, 380, 385, 390, 395, 397) from each of the buffer slots to a next successively smaller buffer slot; and
repeating the drawing (320) a next entire frame (365), the downscaling (330) contents of each of the buffer slots, and copying (340) the downscaled contents (370, 375, 380, 385, 390, 395, 397), wherein the repeating is pipelined (320, 330, 340) so that each of the buffer slots contains a different frame (370, 375, 380, 385, 390, 395, 397) in successive degrees of downscaling.

2. The method of claim 1, wherein a last buffer slot of the plurality of buffer slots of the texture buffer (350) is a 1 pixel buffer slot and the content (397) in the last buffer slot is an average value for reduction operations of a respective frame.

3. The method of claim 1, wherein said downscaling (330) downscales the contents of each buffer slot to ¼ size.

4. The method of claim 3, wherein said downscaling (330) downscales the contents (365, 370, 375, 380, 385, 390, 395) of seven buffer slots together.

5. A program or code segments stored in a processor readable medium or transmitted by a computer data signal embodied in a carrier wave, or a signal modulated by a carrier, comprising executable code to perform the method of any ofclaims 1-4.

6. A graphics processing unit to enable reduction operations to be performed on multiple images concurrently, the unit comprising logic to perform the method as claimed in any one of claims 1 to 4.

7. A system to enable reduction operations to be performed on multiple images concurrently, the system comprising
a central processing unit 'CPU';
a graphics processing unit `CPU'; and
memory coupled to the CPU and to the GPU to store an application, the application when executed causing the GPU to perform reduction operations according to claim 5.

## Patentansprüche

1. Verfahren zum Ermöglichen der Durchführung von Verkleinerungsoperationen an mehreren Einzelbildern gleichzeitig in einer Grafikverarbeitungseinheit GPU, wobei das Verfahren Folgendes umfasst:
Initialisieren (300) eines Texturpuffers (350), der zweimal so groß wie die zu verarbeitenden Einzelbilder (365) ist und eine erste Seite (355) und eine zweite Seite (360) umfasst, wobei die erste Seite (355) einen ersten Pufferschlitz zum Speichern eines gesamten Vollbildes (365) umfasst und die zweite Seite (360) mehrere Pufferschlitze zum Speichern von herunterskalierten Versionen (370, 375, 380, 385, 390, 395, 397) des gesamten Vollbildes (365) umfasst, wobei die mehreren Pufferschlitze sukzessiv kleiner werden;
Zeichnen (320) eines ersten gesamten Vollbildes (365) in den ersten Pufferschlitz;
Herunterskalieren (330) des ersten gesamten Vollbildes (365) aus dem ersten Pufferschlitz und Kopieren (340) der herunterskalierten Version (370) des ersten gesamten Vollbildes (365) in einen zweiten Pufferschlitz der mehreren Schlitze;
Zeichnen (320) eines nächsten gesamten Vollbildes (365) in den ersten Pufferschlitz (355);
Herunterskalieren (330) des Inhalts (365, 370, 375, 380, 385, 390, 395) jedes der Pufferschlitze des Texturpuffers (350) und Kopieren (340) des herunterskalierten Inhalts (370, 375, 380, 385, 390, 395, 397) aus jedem der Pufferschlitze in einen nächsten sukzessiv kleineren Pufferschlitz; und
Wiederholen des Zeichnens (320) eines nächsten gesamten Vollbildes (365), des Herunterskalierens (330) von Inhalt jedes der Pufferschlitze und des Kopierens (340) des herunterskalierten Inhalts (370, 375, 380, 385, 390, 395, 397), wobei das Wiederholen im Pipeline-Verfahren (320, 330, 340) durchgeführt wird, so dass jeder der Pufferschlitze ein anderes Vollbild (370, 375, 380, 385, 390, 395, 397) in sukzessiven Graden des Herunterskalierens enthält.

2. Verfahren nach Anspruch 1, wobei ein letzter Pufferschlitz der mehreren Pufferschlitze des Texturpuffers (350) ein 1-Pixel-Pufferschlitz ist und der Inhalt (397) in dem letzten Pufferschlitz ein Mittelwert für Verkleinerungsoperationen eines jeweiligen Vollbildes ist.

3. Verfahren nach Anspruch 1, wobei das Herunterskalieren (330) den Inhalt jedes Pufferschlitzes auf ¼ Größe herunterskaliert.

4. Verfahren nach Anspruch 3, wobei das Herunterskalieren (330) den Inhalt (365, 370, 375, 380, 385, 390, 395) von sieben Pufferschlitzen zusammen herunterskaliert.

5. Programm oder Codesegmente, die in einem prozessorlesbaren Medium gespeichert oder durch ein Computerdatensignal übertragen werden, das in einer Trägerwelle realisiert wird, oder ein durch einen Träger moduliertes Signal, mit ausführbarem Code zum Ausführen des Verfahrens nach einem der Ansprüche 1-4.

6. Grafikverarbeitungseinheit zur Ermöglichung der Durchführung von Verkleinerungsoperationen an mehreren Bildern gleichzeitig, wobei die Einheit Logik zum Ausführen des Verfahrens nach einem der Ansprüche 1 bis 4 umfasst.

7. System zum Ermöglichen der Durchführung von Verkleinerungsoperationen an mehreren Bildern gleichzeitig, wobei das System Folgendes umfasst;
eine Zentralverarbeitungseinheit CPU;
eine Grafikverarbeitungseinheit GPU; und
einen mit der CPU und mit der GPU gekoppelten Speicher zum Speichern einer Anwendung, wobei die Anwendung, wenn sie ausgeführt wird, bewirkt, dass die GPU Verkleinerungsoperationen nach Anspruch 5 ausführt.

## Revendications

1. Procédé permettant l'exécution d'opérations de réduction de manière concurrente sur plusieurs trames d'images dans une unité de traitement graphique 'GPU', le procédé comprenant les étapes suivante :
initialiser (300) une mémoire tampon de textures (350) qui fait deux fois la taille des trames d'images (365) à traiter et qui comporte un premier côté (355) et un deuxième côté (360), le premier côté (355) contenant un premier emplacement de mémoire tampon destiné à stocker une trame entière (365) et le deuxième côté (360) contenant une pluralité d'emplacements de mémoire tampon destinés à stocker des versions de résolution inférieure (370, 375, 380, 385, 390, 395, 397) de la trame entière (365), la pluralité d'emplacements de mémoire tampon étant successivement plus petits ;
tirer (320) une première trame entière (365) vers le premier emplacement de mémoire tampon ;
réduire l'échelle (330) de la première trame entière (365) à partir du premier emplacement de mémoire tampon et copier (340) la version de résolution inférieure (370) de la première trame entière (365) dans un deuxième emplacement de mémoire tampon de la pluralité d'emplacements de mémoire tampon ;
tirer (320) une trame entière (365) suivante vers le premier emplacement de mémoire tampon (355) ;
réduire l'échelle (330) du contenu (365, 370, 375, 380, 385, 390, 395) de chacun des emplacements de mémoire tampon de la mémoire tampon de textures (350) et copier (340) le contenu réduit d'échelle (370, 375, 380, 385, 390, 395, 397) à partir de chacun des emplacements de mémoire tampon dans un emplacement de mémoire tampon successivement plus petit ; et
répéter les étapes consistant à tirer (320) une trame entière (365) suivante, à réduire l'échelle (330) du contenu de chacun des emplacements de mémoire tampon, et à copier (340) le contenu réduit d'échelle (370, 375, 380, 385, 390, 395, 397), l'étape de répétition étant en pipeline (320, 330, 340) de telle sorte que chacun des emplacements de mémoire tampon contient une trame différente (370, 375, 380, 385, 390, 395, 397) dans des degrés successifs de réduction d'échelle.

2. Procédé selon la revendication 1, dans lequel un dernier emplacement de mémoire tampon de la pluralité d'emplacements de mémoire tampon de la mémoire tampon de textures (350) est un emplacement de mémoire tampon de 1 pixel et le contenu (397) du dernier emplacement de mémoire tampon est une valeur moyenne pour des opérations de réduction d'une trame respective.

3. Procédé selon la revendication 1, dans lequel ladite étape de réduction d'échelle (330) réduit l'échelle du contenu de chaque emplacement de mémoire tampon à ¼ de sa taille.

4. Procédé selon la revendication 3, dans lequel ladite étape de réduction d'échelle (330) réduit l'échelle du contenu (365, 370, 375, 380, 385, 390, 395) de sept emplacements de mémoire tampon à la fois.

5. Segments de programme ou de code stockés dans un support lisible par un processeur ou transmis par un signal de données informatiques incorporé dans une onde porteuse, ou par un signal modulé par une porteuse, comprenant un code exécutable permettant d'exécuter le procédé de l'une quelconque des revendications 1-4.

6. Unité de traitement graphique permettant l'exécution d'opérations de réduction de manière concurrente sur plusieurs images, l'unité comprenant une logique destinée à exécuter le procédé selon l'une quelconque des revendications 1 à 4.

7. Système permettant l'exécution d'opérations de réduction de manière concurrente sur plusieurs images, le système comprenant :
une unité de traitement centrale 'CPU.' ;
une unité de traitement graphique 'GPU' ; et
une mémoire couplée au CPU et au GPU permettant de stocker une application, l'application, lorsqu'elle est exécutée, amenant le GPU à exécuter des opérations de réduction selon la revendication 5.
